# EUROPÄISCHE PATENTANMELDUNG

(11) **EP 0 764 578 A2**
(43) Veröffentlichungstag der Anmeldung: **26.03.1997**
(21) Anmeldenummer: 96113626.4
(22) Anmeldetag: 26.08.1996
(51) Int. Cl.: B64F 1/305

(54) **Fluggastbrücke mit eine Tragstruktur bildenden Seitenwänden**

(30) Priorität: 22.09.1995 DE 19535182
(71) Anmelder: THYSSEN INDUSTRIE AG, 45128 Essen (DE)
(72) Erfinder: Harder, Helmut, Ing. (grad.), 34121 Kassel (DE)

(57) **Zusammenfassung**

Die Erfindung betrifft eine Fluggastbrücke mit eine Tragstruktur bildenden, vorzugsweise durchsichtigen Seitenwänden, mit Längsholmen und senkrecht zu diesen verlaufenden Querstegen als Bestandteile der Tragstruktur. Eine solche Fluggastbrücke soll dahingehend weiterentwickelt werden, daß deren Tragstruktur bei vergleichsweise geringer Masse die beim Betrieb der Fluggastbrücke auftretenden statischen und dynamischen Kräfte sicher aufzunehmen ermöglicht.

Diese Aufgabe wird erfindungsgemäß gelöst, indem in der Tragstruktur der Seitenwände Zuganker vorgesehen sind, die im wesentlichen diagonal zu den von den Längsholmen und Querstegen gebildete Fläche verlaufen und die in der Grenzbereichen zwischen Längsholmen und Querstegen über Halteelemente befestigt sind.

## Beschreibung

Die Erfindung betrifft eine Fluggastbrücke mit eine Tragstruktur bildenden Seitenwänden gemäß dem Oberbegriff des Anspruchs 1.

Fluggastbrücken, deren Seitenwände Längsholme und senkrecht zu diesen verlaufende Querstege als Elemente einer Tragstruktur enthalten, sind hinreichend bekannt. Zur Erhaltung einer für alle Betriebsbedingungen ausreichenden Stabilität einer solchen Tragstruktur kommen druck- und zugbelastbare Profilkörper zum Einsatz, die starr mit den Längsholmen und Querstegen verbunden sind. Die erhebliche Masse derartiger Konstruktionen wirkt einer schnellen und lagegenauen Änderung der Position der Fluggastbrücke entgegen.

Der Erfindung liegt daher die Aufgabe zugrunde, eine Fluggastbrücke dahingehend weiterzuentwickeln, daß deren Tragstruktur bei vergleichsweise geringer Masse die beim Betrieb der Fluggastbrücke auftretenden statischen und dynamischen Kräfte sicher aufzunehmen ermöglicht.

Erfindungsgemäß wird diese Aufgabe gelöst, indem in der Tragstruktur der Seitenwände Zuganker vorgesehen sind, die im wesentlichen diagonal zu den von den Längsholmen und Querstegen gebildeten Flächen verlaufen und die in den Grenzbereichen zwischen Längsholmen und Querstegen über Halteelemente befestigt sind. Da diese Zuganker keine Druckkräfte aufnehmen müssen, können sie im Vergleich zu bekannten druck- und zugbelastbaren Profilkörpern von geringerer Masse sein. Infolge der somit reduzierten Gesamtmasse der Fluggastbrücke besteht bevorzugt die Möglichkeit, im Bereich der Seitenwände Glaselemente oder andere optisch durchlässige Elemente einzusetzen.

Die Erfindung ist mit Vorteil verbunden, daß die auf die Fluggastbrücke einwirkenden Kräfte am Ort ihrer Entstehung nicht in voller Höhe in die Tragstruktur eingetragen werden, sondern daß zumindest ein Teil einer solchen Kraft in angrenzende Bereiche der Tragstruktur weitergeleitet und dort abgebaut wird. Damit liegt ein quasielastisches Verhalten der Tragstruktur der Fluggastbrücke vor, so daß auch hohe spezifische Kräfte problemlos von der Tragstruktur aufgenommen werden.

Zur Erhöhrung der dynamischen Belastbarkeit und Verwindungssteifigkeit der Fluggastbrücke befinden sich in einer von den Längsholmen einer Seitenwand und zwei benachbarten Querstegen dieser Seitenwand gebildeten Fläche zwei gekreuzte Zuganker. Sie können in einer gemeinsamen Ebene liegen, wobei bevorzugt im Kreuzungsbereich beider durch ein Führungselement die gemeinsame Ebene auch bei sich ändernden Kräften erhalten bleibt.

Des weiteren können zur Überlagerung von auf die Tragstruktur der Fluggastbrücke einwirkenden Kräften die Zuganker im Kreuzungsbereich beabstandet sein.

In zweckmäßiger Ausführung der Erfindung sind die Zuganker im Vergleich zu den Längsholmen und Querstegen von geringem, vorzugsweise rundem Querschnitt.

Die Zuganker können zumindest einseitig drehbar gelagert sein. Eine solche Ausführung der Erfindung erlaubt einen effizienten Abbau von dynamischen Kräften in der Tragstruktur der Fluggastbrücke.

Weisen die Zuganker eine vorwählbare Vorspannung auf, werden auch erhebliche dynamische Kräfte in die Tragstruktur eingeleitet, ohne zu Schwingungen oder Resonanzerscheinungen an der Fluggastbrücke zu führen.

Im folgenden wird eine bevorzugte Ausführungsform der Erfindung anhand von Zeichnungen näher erläutert.

Es zeigen:
- Fig. 1: einen Abschnitt einer Fluggastbrücke in Seitenansicht,
- Fig. 2: eine Fig. 1 entsprechende Darstellung mit speziell ausgeführten Zugankern,
- Fig. 3, 4: verschiedene Möglichkeiten für Halteelemente und deren Verbindung mit den Zugankern.
- Fig. 5: einen Seitenwandbereich mit gekreuzten Zugankern und im Kreuzungsbereich befindlichem Führungselement und
- Fig. 6: einen entsprechenden Seitenwandbereich mit gegenüber Fig. 5 geänderten Halteelementen.

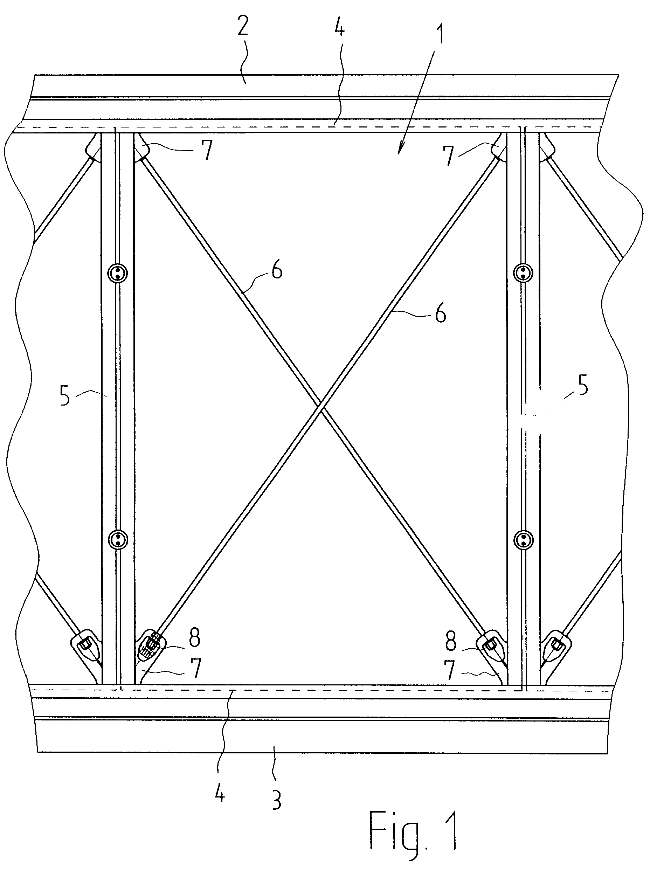

Die in Fig. 1 darstellte Seitenwand 1 einer Fluggastbrücke wird nach oben durch Dachelemente 2 und nach unten durch einen Boden 3 begrenzt. Die Tragstruktur der Seitenwand 1 der Fluggastbrücke besteht aus Längsholmen 4, Querstegen 5 und Zugankern 6. Im Grenzbereich zwischen Längsholmen 4 und Querstegen 5 sind Halteelemente 7 angeordnet. Mit den Halteelementen 7 sind jeweils diagonal verlaufende Zuganker 6 verbunden. Die Zuganker 6 können über eine Verschraubung 8 befestigt und infolge eines entsprechenden Anzugsdrehmomentes der Verschraubung 8 vorgespannt sein.

Weiterhin liegt es im Bereich der Erfindung, zusätzliche, in der Zeichnung nicht dargestellte Ausgleichskörper, wie Tellerfedern, zur Spielunterdrückung bei Entlastung des Zugankers infolge Lastwechsels einzusetzen.

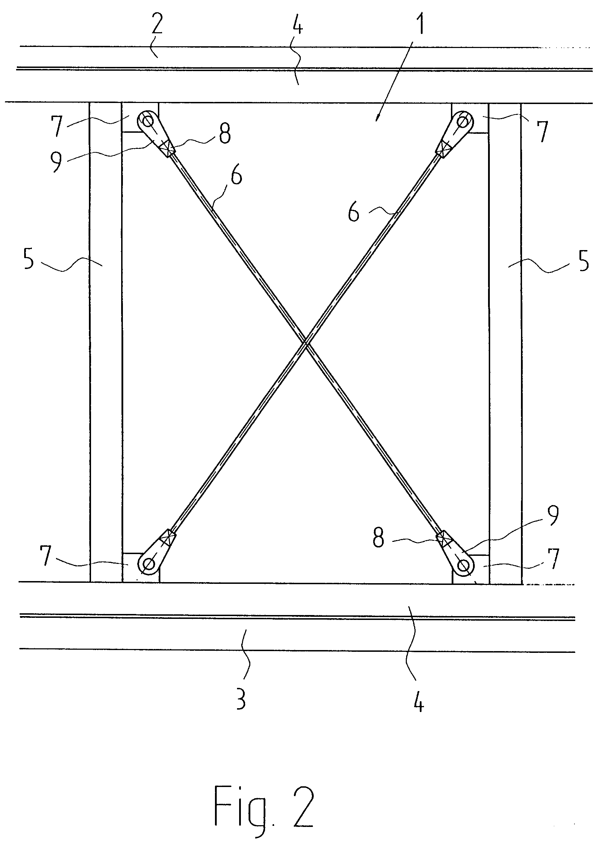

Zur Erzeugung einer entsprechenden Vorspannung ist es möglich, die Enden des Zugankers 6 mit gegensinnigem Gewinde zu versehen, das in korrespondierende Gewindeabschnitte der Schwenkstücke 9 der Halteelemente 7 eingreift (Fig. 2).

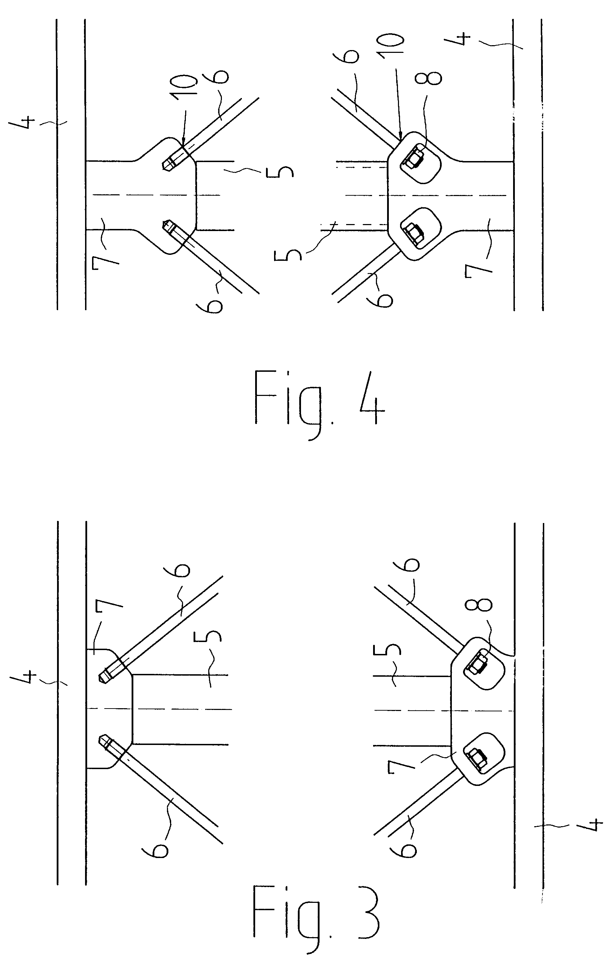

Desweiteren besteht die Möglichkeit, die Halteelemente 7 für benachbarte Felder der Tragstruktur zu nutzen, indem der Quersteg 5 verkürzt ausgebildet ist und die Halteelemente 7 den entstehenden Freiraum zwischen Längsholmen 4 und Querstegen 5 ausfüllen (Fig.3, 4). Hierdurch wird eine zweckmäßige Verteilung der in die Tragstruktur einzuleitenden Kräfte erreicht.

Zum Ausgleich von Veränderungen im Breiten-Höhen-Verhältnis der Tragstruktur und zu einer gezielten Überlagerung der bei Betrieb der Fluggastbrücke auftretenden Kräfte können desweiteren, wie aus Fig. 4 ersichtlich, die Anschlußorte 10 der Haltelemente 7 für die Zuganker 6 von den Längsholmen 4 beabstandet sein.

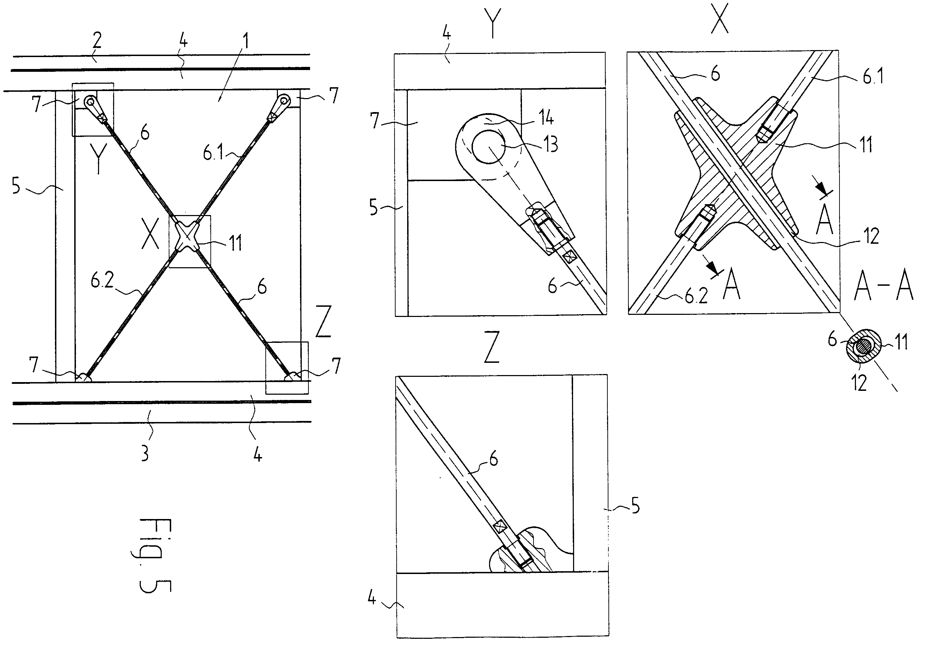

Um eine gemeinsame Ebene der Zuganker zu fixieren, ist im Kreuzungsbereich derselben - wie aus Fig. 5 ersichtlich - ein Führungselement 11 angeordnet. In das Führungselemente 11 ist der zweigeteilte Zuganker 6.1, 6.2 eingeschraubt. Ein weiterer Zuganker 6 durchtunnelt im Bereich einer Aussparung 12 das Führungselement 11. Die Querschnittfläche der Aussparung 12 ist größer als die des ungeteilten Zugankers 6, so daß sowohl eine Führung des Zugankers 6 als auch eine Bewegungsentkopplung der Zuganker 6.1, 6.2 vom Zuganker 6 gewährleistet ist.

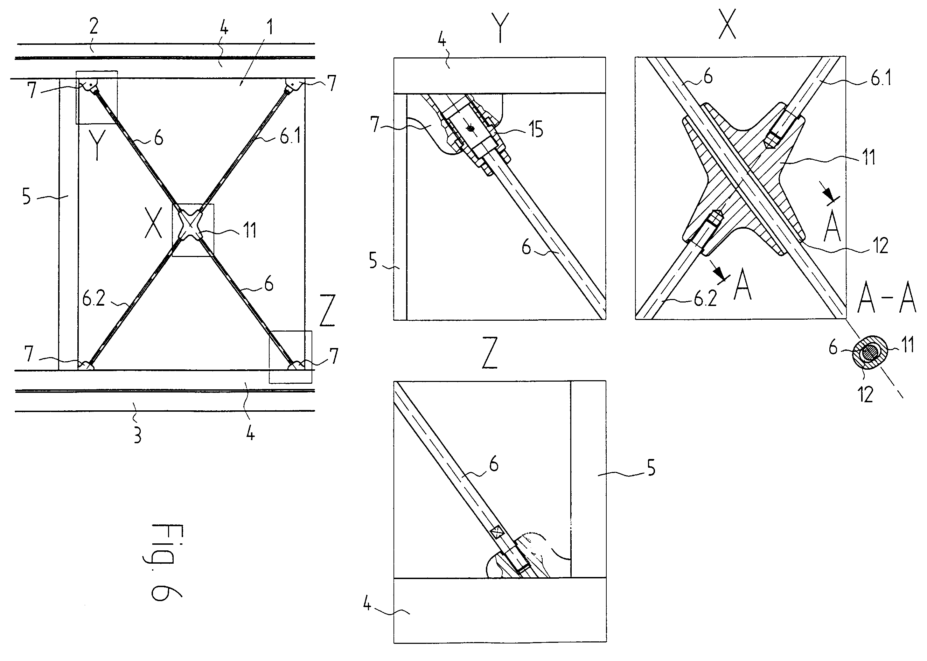

Zur Verbindung der Zuganker 6, 6.1, 6.2 mit der übrigen Tragstruktur können verschiedene Halteelemente 7 zum Einsatz gelangen. So wird gemäß Fig. 5 (Detail Y) ein mit dem Zuganker 6 verbundener Quersteg 13 in einem Langloch 14 des Halteelementes 7 zugeführt. Des weiteren kann in das Halteelement 7 ein Gewindestift 15, der den Zuganker 6 in Zugrichtung formschlüssig umgibt (Fig.6, Detail Y), eingeschraubt sein.

## Patentansprüche

1. Fluggastbrücke mit eine Tragstruktur bildenden, vorzugsweise durchsichtigen Seitenwänden, mit Längsholmen und senkrecht zu diesen verlaufenden Querstegen als Bestandteile der Tragstruktur, dadurch gekennzeichnet, daß in der Tragstruktur der Seitenwände Zuganker (6) vorgesehen sind, die im wesentlichen diagonal zu den von den Längsholmen (4) und Querstegen (5) gebildeten Flächen verlaufen und die in den Grenzbereichen zwischen Längsholmen (4) und Querstegen (5) über Halteelemente (7) befestigt sind.

2. Fluggastbrücke nach Anspruch 1, dadurch gekennzeichnet, daß sich in einer von den Längsholmen (4) einer Seitenwand und zwei benachbarten Querstegen (5) dieser Seitenwand gebildeten Fläche zwei gekreuzte Zuganker (6) befinden.

3. Fluggastbrücke nach Anspruch 2, dadurch gekennzeichnet, daß die Zuganker (6) in einer gemeinsamen Ebene liegen.

4. Fluggastbrücke nach Anspruch 3, dadurch gekennzeichnet, daß den gekreuzten Zugankern (6) im Kreuzungsbereich ein Führungselement (11) zugeordnet ist.

5. Fluggastbrücke nach Anspruch 4, dadurch gekennzeichnet, daß ein Zuganker (6.1, 6.2) zweigeteilt ausgeführt ist, daß beide Teile dieses Zugankers (6.1, 6.2) durch das Führungselement (11) verbunden sind und daß der zweite, ungeteilt ausgeführte Zuganker (6) das Führungselement (11) im Bereich einer Aussparung (12) durchtunnelt.

6. Fluggastbrücke nach Anspruch 2, dadurch gekennzeichnet, daß die Zuganker (6) im Kreuzungsbereich zueinander beabstandet sind.

7. Fluggastbrücke nach Anspruch 1 oder 2, dadurch gekennzeichnet, daß die Zuganker (6) im Vergleich zu den Längsholmen (4) und Querstegen (5) von geringem Querschnitt sind.

8. Fluggastbrücke nach Anspruch 7, dadurch gekennzeichnet, daß die Zuganker (6) einen runden Querschnitt aufweisen.

9. Fluggastbrücke nach Anspruch 1 oder 2, dadurch gekennzeichnet, daß die Zuganker (6) zumindest einseitig drehbar gelagert sind.

10. Fluggastbrücke nach Anspruch 1 oder 2, dadurch gekennzeichnet, daß die Zuganker (6) eine vorwählbare Vorspannung aufweisen.

11. Fluggastbrücke nach Anspruch 10, dadurch gekennzeichnet, daß zwischen den Zugankern (6) und den Halteelementen (7) bei Entlastung des Zugankers (6) wirkende Ausgleichskörper, wie Tellerfedern oder dgl., vorgesehen sind.
